(19)

Europäisches
Patentamt
European
Patent Office
Office européen
des brevets

(11)     **EP 1 208 660 B1**

(12)     **EUROPEAN PATENT SPECIFICATION**

(45) Date of publication and mention
of the grant of the patent:
**25.08.2010   Bulletin 2010/34**

(21) Application number: **01944133.6**

(22) Date of filing: **11.05.2001**

(51) Int Cl.:
***H04B 7/185*** (2006.01)

(86) International application number:
**PCT/US2001/015393**

(87) International publication number:
**WO 2001/091310 (29.11.2001 Gazette 2001/48)**

(54) **MULTI-NODE POINT-TO-POINT SATELLITE COMMUNICATION SYSTEM EMPLOYING MULTIPLE GEO SATELLITES**

MEHRFACHKNOTEN PUNKT-ZU-PUNKT SATELLITENKOMMUNIKATIONSSYSTEM MIT MEHREREN GEO-SATELLITEN

SYSTEME DE COMMUNICATION PAR SATELLITE POINT-A-POINT MULTINODAL UTILISANT PLUSIEURS SATELLITES GEOSTATIONNAIRES

(84) Designated Contracting States:
**DE ES FR GB IT**

(30) Priority: **22.05.2000   US 576652**

(43) Date of publication of application:
**29.05.2002   Bulletin 2002/22**

(73) Proprietor: **The DIRECTV Group, Inc.
El Segundo, CA 90245 (US)**

(72) Inventors:
• **HAGEN, Frank, A.
Palos Verdes Estates, CA 90274 (US)**

• **FLAMMANG, Richard
Manhattan Beach, CA 90245 (US)**
• **YUNG, Kar, W.
Torrance, CA 90503 (US)**
• **CHANG, Donald, C., D.
Thousand Oaks, CA 91360 (US)**

(74) Representative: **Steil, Christian et al
Witte, Weller & Partner
Postfach 10 54 62
70047 Stuttgart (DE)**

(56) References cited:
**EP-A- 0 837 568     US-A- 5 233 626
US-A- 5 839 053**

**Description**

The present invention relates to a communication method according to the preamble of claim 1 and to a communication system according to the preamble of claim 6, as known from US-A-5 839 059.

The present invention relates generally to a satellite communication system. More specifically, the present invention relates to a satellite communication system with increased frequency re-use capability for point-to-point communication.

Background Art

Current mobile satellite communication systems, such as Iridium, Globalstar, and ICO, utilize low-cost user terminals as one of their key system features. To maintain communications linkage with these current mobile systems, the system satellites provide multiple beam and high-gain services to the subscribers. The low-cost and low-gain hand-held terminals utilized by the users of these systems, transmit and receive signals to and from high performance satellites which populate almost the entire hemisphere. Some of these current systems require access to at least two satellites to assure a soft hand-over process as the satellites progress from horizon to horizon. As a result, the satellite system becomes more reliable and available as more satellites come into a user's field of view (FOV). The satellite constellations provided by these current systems are thus sized to guarantee a minimum number of satellites within a user's FOV over large coverage areas at all times.

All of these current mobile satellite communication systems, however, suffer from certain disadvantages. First, they all have limited frequency (the term "frequency" is generalized here to refer to frequency time slot or CDMA code) resources. Any given frequency over a given ground position can only be utilized by one user at a time. Thus, if one user accesses a satellite using a particular frequency to communicate to his counterpart on the network, other satellites and/or users in the same region cannot reuse the same frequency resource in the same local area. In particular, if a nearby secondary user has a handset that requires the same frequency resource as is being utilized by the first user, the second user is unable to access the system, even via different satellites. This is true regardless of the sophistication of the system, including systems that utilize multiple beam satellite designs. Even when multiple satellites are available at a given geographic location, the same frequency spectrum cannot be used by more than one user in a local area. The availability of multiple satellites merely serves to increase the availability of the system to the user. However, the total capacity of these mobile communication satellite systems is still limited by their inefficient usage of the available frequency resources. Thus, the potential growth of these current satellite communication systems is inherently limited.

Additionally, current telecommunications systems generally allow only mobile-to-hub and hub-to-mobile communications in most low earth orbit and medium earth orbit mobile satellite constellations. Mobile-to-mobile linkages require multiple hops between hubs. This means that two or more frequency resources must be committed by the system to close the link. It is clearly desirable to provide a mobile communication satellite system that relaxes the above constraints, and more efficiently utilizes current mobile satellite communication system resources, while also providing much greater opportunity for system growth.

Document US-A-5839053 discloses a system for transmitting radio signals from mobile terminals to provide space diversity for uplink signals via geostationary communication satellites, wherein at least one satellite and at least one auxiliary satellite are co-located in a particular geostationary orbit about the earth.

Document US-A-5233626 discloses a repeater diversity spread spectrum communication system, comprising satellites in low earth orbit or in geosynchronous orbit.

Finally, EP 0837 568 A2 discloses a diversity communication system, comprising a constellation of satellites in non-geostationary orbits.

It is an object of the present invention to provide an improved satellite communication method and an improved mobile wireless communication system.

Particularly, it is an object of the present invention to provide a mobile wireless communication system with reduced limitations on frequency re-use for point-to-point communications.

It is another object of the present invention to provide a satellite communication system that utilizes individual transponders and mobile terminals that are relatively simple and of low complexity.

It is a further object of the present invention to provide a satellite communication system with high system reliability through graceful degradation.

It is still another object of the present invention to provide a satellite communication system wherein the individual transponders and the mobile terminals are both of low complexity, and with the complexity of the system concentrated at the central processing hub stations.

It is yet a further object of the present invention to provide a satellite communication system utilizing a plurality of satellites in orbits which are slightly perturbed relative to a single GEO reference orbit (or slot).

It is still an additional object of the present invention to provide a satellite communication system whose capacity can be readily and easily increased.

The above object is achieved by a satellite communication method of claim 1 and by a mobile wireless communication system of claim 5.

In accordance with the objects of the present invention, a wireless communication system is provided. The wireless communication includes a satellite constellation consisting of a plurality of satellites each in an orbit which is slightly perturbed relative to the same geosynchronous orbit. Each of the satellites in the constellation is capable of communicating with a ground hub for receiving signals processed by the ground hub and which are radiated by the ground hub to a plurality of the plurality of satellites. Each of the satellites is capable of communicating with a plurality of mobile user terminals for reradiating said signal to an intended user. The orbits of the plurality of satellites are all perturbed relative to the same geosynchronous reference orbit in such a way that their periods remain substantially constant (i.e., one sidereal day).

These and other features of the present invention will become apparent from the following description of the invention, when viewed in accordance with the accompanying drawings and appended claims.

Brief Description of the Drawings

FIGURE 1 is a schematic illustration of the forward link geometry of a mobile satellite communications system in accordance with the present invention;

FIGURE 2 is a schematic block diagram illustrating the signal transmission function of a ground telecommunications hub for a wireless communications system in accordance with a preferred embodiment of the present invention;

FIGURE 3 is a schematic illustration of the return link geometry of a wireless communications system in accordance with a preferred embodiment of the present invention;

FIGURE 4 is a schematic block diagram illustrating the signal receive function of a ground telecommunications hub for a wireless communications system in accordance with a preferred embodiment of the present invention;

FIGURE 5 is a schematic flow diagram illustrating the overall architecture for a multiple transponder wireless communications system in accordance with a preferred embodiment of the present invention;

FIGURE 6 is a schematic diagram illustrating the geometry used to obtain spatial relationships between a pair of perturbed geosynchronous satellites in accordance with a preferred embodiment of the present invention;

FIGURE 7 is an exemplary graph plotting fringe phase and power envelope for a pair of transponder nodes in accordance with a preferred embodiment of the present invention;

FIGURE 8 is an exemplary graph illustrating the constraints on the positions of the various users (intended and interfering) relative to the nominal position of the intended user in accordance with a preferred embodiment of the present invention; and

FIGURE 9 is an exemplary illustration of the ground traces of two satellites in perturbed geosynchronous orbits.

**Best Mode(s) for Carrying Out the Invention**

Referring now to the figures, the disclosed mobile communication system can be utilized to break away from the frequency spectrum limitation discussed above and provide much more efficient means to re-use the allocated mobile satellite and wireless spectrum multiple times. By eliminating this frequency spectrum limitation, or the operation of multiple satellites, the overall capacity of existing mobile satellite and wireless communication systems can more readily expand.

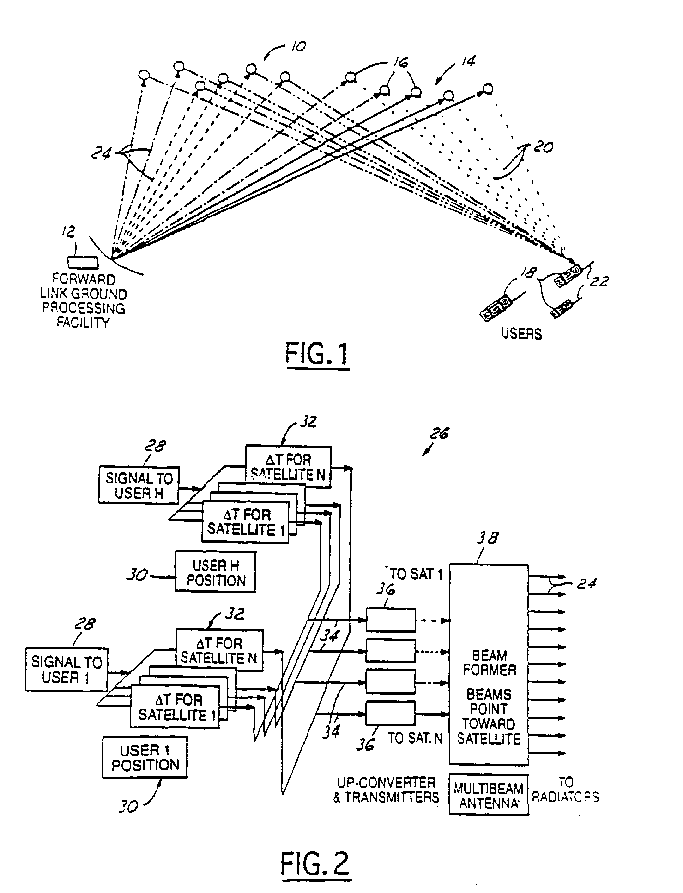

Referring now to Figure 1, a mobile satellite communication system 10 in accordance with a preferred embodiment of the present invention is illustrated. In Figure 1, the mobile satellite communications system 10 is illustrated in a forward link mode. The mobile satellite communications system 10 includes a ground telecommunications hub 12, a satellite constellation 14 including a plurality of individual satellites 16, and a plurality of hand-held user terminals 18 such as mobile phones. As discussed in more detail below, the user terminals 18 can receive communication signals 20 simultaneously from multiple satellites 16 via their broad beam antennas 22. The ground telecommunications hub 12 is in communication with all of the satellites 16 in the satellite constellation 14 individually and simultaneously. The hub 12 also pre-processes user signals to compensate for path differentials before sending radiated signals 24 to the satellites 16, as discussed in more detail below.

In accordance with the preferred embodiment, the design of the individual satellites 16 can be significantly simplified over those utilized in prior mobile systems because the satellite constellation 14 functions as a sparse radiating array. It is known that the more satellites 16 that are included in a satellite constellation 14, the better the performance the mobile satellite communications system 10 will achieve. Satellites that are simple, small, and provide high performance are preferable. This is because the performance of the system 10 depends more heavily on the satellite constellation 14 than on the individual satellites 16.

In a transmit mode, shown in Figure 1, the individual satellites 16 radiate modulated RF power to a chosen field of view ("FOV"). The system 10 is still operable with reduced capacity and no reconfiguration even if one individual satellite 16 is lost for any reason. As a result, the system 10 features graceful degradation characteristics and provides very high reliability and availability. Most of the complexity of the system 10 is located in the ground hubs 12, which locate and track the potential users and perform the major functions of beamforming and filtering, as discussed below.

As shown in Figure 2, the processing performed at the ground telecommunications hub 12 is diagrammatically illustrated. The hub 12 tracks, updates, and forward predicts the time variant differential information among various paths between the hub 12 and the intended user terminals 18. The accuracy of this information must be within a tenth of an RF wavelength. For UHF satellite systems, the required path differential accuracy is preferably about ten (10) centimeters. For L and S band mobile satellite constellations, the accuracy must be on the order of one (1) centimeter. Unfortunately, the conventional or GPS techniques are not able to provide the required accuracy.

In accordance with the present invention, the required accuracy of the equivalent path differentials, including all propagation distortion, can be provided using two-way active calibration and R2N (two-way ranging navigation) techniques. An R2N technique is just one technique for obtaining positioning information by which to locate the positioning of the satellites and users precisely using multiple calibration sites and is described in co-pending U.S. Patent Application Serial No. 09/209,062, entitled "Method and System for Determining a Position of a Transceiver Unit Incorporating Two-Way Ranging Navigation as a Calibration Reference for GPS," and filed on December 10, 1998. Other known techniques may also be utilized.

The ground telecommunications hub 12 has a processing center 26 that processes each signal and is shown in a transmit mode in Figure 2. The hub 12 has the capability to address the plurality of satellites 16 individually through the use of antenna spatial discrimination to provide separate signals to different satellites. Alternatively, code identification can also be used to address different satellites independently.

As shown in Figure 2, assuming that there are "H" users, the signals from user 1 to user H, identified generally by reference number 28, are input into the processing center 26. The position of the various users (1 to H), are determined generally by the circuitry from the various user signals 28, designated by reference number 30. The various user signals 28 for user 1 to user H are then combined for transmission to the different satellites 16, as generally indicated by reference number 32. In this case, the signal is sent to N satellites. The combined signals are then amplified, filtered, up converted, and then further amplified, as generally indicated by reference number 36. These signals are then delivered to a multiple beam antenna 38 where beam-forming processing is done so that the signals can be transmitted to the N satellites via radiating signals 24. The beam-forming process can be done in baseband or a low IF frequency band by either digital or analog means. For a low bandwidth (less than a few MHz signals), digital implementation can provide cost advantages. The processed signal 24, radiated from the ground hub 12 to each satellite, is amplified, filtered, and then re-radiated by each of the multiple satellites 16 to arrive at a designated user location simultaneously. Consequently, the radiated signals from the multiple satellites will be received coherently by a simple broad beam antenna 22 of a hand-held terminal.

Equivalently, the effect of the spatial processing performed by the processing center 26 is to focus signal strength on the user from multiple satellites 16, which act like sparsely separated portions of a large active reflector. Therefore, the processing on the ground will insert different time delays into the signals 24 which are radiated via various paths. The time delays will be inserted into the signals 24 as if the satellites were located on an ellipsoidal surface, of which the two foci are located exactly at the hub 12 and the designated user 18 positions respectively. In low and middle earth orbit constellations, the users 18 and the hub 12 will always be in the near field of the sparse array.

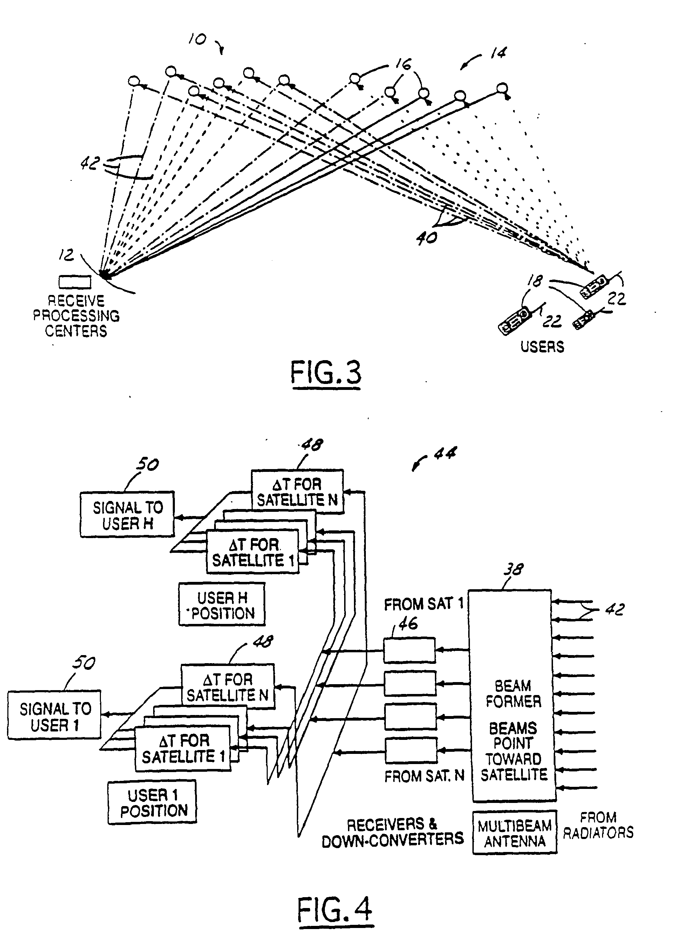

In a receive mode, shown in Figure 3, the individual satellites 16 collect RF signals from the same FOV. Figure 3 illustrates the return link geometry for receiving signals sent from the user terminals 18 to the ground telecommunications hub 12. As shown in Figure 3, there are two groups of links (signals) involved: the links between users 18 and the satellites 16, generally indicated by reference number 40, and those between the satellites 16 and the hub 12, as generally indicated by reference number 42 (signals). For best performance, the user antennas 22 preferably are able to illuminate all the satellites 16 involved. This will lead to a constraint on the variation of the gain of the user antenna 22 over the cluster.

As with the forward link geometry, the satellites 16 will amplify the signals 40 received from the users 18 and re-radiate the signals 42 toward the hub 12. The hub 12 can receive signals 42 independently, but simultaneously from the satellites 16, and will add the signals 42 from different satellites coherently in the post-processor 44 as illustrated in Figure 4.

The signal flows on the block diagram shown in Figure 4 illustrate the receive function of the post-processor 44 and the hub 12. The signal flows are reversed from the corresponding ones in Figure 2. Therefore the receive process will not be reiterated in detail. However, the links 42 from the satellites 16 to the hub 12 are received at the beamformer 38 and then transferred to the receiver and down converters 46 before the signals are separated. The signals are separated depending upon the user from which they are received, as generally indicated by reference number 48, and then sent to the specific user 1 through H, as generally indicated by reference number 50. It should be understood that both the receive and transmit function are a necessary part of the pathlink calibration and user positioning.

The technique of the present invention has been demonstrated to significantly reduce the average side lobe levels. It has been determined that this is due to three factors. First, the proposed architecture is not a periodic array, but rather a randomly spaced sparse array, which has no grating lobes. Although the average side lobe level at a single frequency is relatively high, the level decreases with increasing bandwidth. Second, the large sparsely filled array formed by moving satellites is a large extended aperture size. Thus, all of the users on the ground are in the near field of the extended aperture and the wave fronts received by all users are spherical instead of planar. Consequently, dispersion effects become much more pronounced than would be the case in the far field. The dispersion grows very fast as a probe is scanned away from the main beam and the dispersion smears the power distribution very effectively over a finite signal bandwidth. Third, the communication system is preferably designed with a large frequency bandwidth. The information signal will therefore be spread over this bandwidth via CDMA or through short duration waveforms for TDMA schemes.

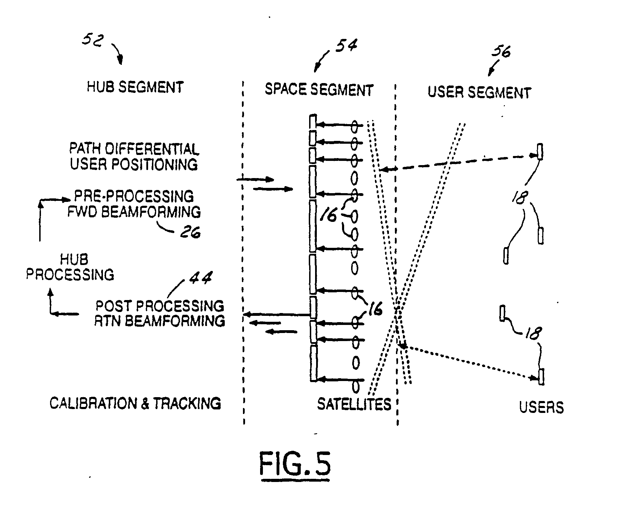

Figure 5 illustrates diagrammatically the operation of the invention, which allows for the increased re-use of precious frequency spectrum, by multiple satellites. The advantages provided by this system include no limitation on frequency re-use by additional satellites for point-to-point communications. Rather, the capacity of this system is only limited by total satellite RF power. Further, the preferred embodiment allows for the use of simple and low cost satellite designs, because the more satellites included in the constellation, the better the performance of the overall system. The system also provides high system reliability through graceful degradation, as well as concentrating complex processing at the hubs.

The preferred embodiment creates demand for a large number of low cost satellites and also uses R2N techniques to perform satellite and user positioning. The more users using this system, the more accurately the satellite and user positions can be determined. However, even more important than the actual positions of the users and satellites are the path lengths traversed by the signals. Therefore, periodic calibration techniques applied directly to those path lengths may be much simpler and more cost effective. Further, the system also benefits from the large percentage bandwidths available with CDMA and TDMA systems.

As shown in Figure 5, the present invention is divided up into three segments: a hub segment 52 containing the ground telecommunications hub 12, a space segment 54 containing a plurality of individual satellites 16, and a user segment 56, having a plurality of user terminals 18. The hub segment also has a processing center 26 and a post-processor 44 for processing the received and transmitted signals.

The user terminals 18 receive and transmit signals simultaneously from/to multiple satellites 16 via their broad beam antennas. The user terminals 18 do not require any capability to separately address the individual satellites 16 of the space segment 54. The hub 12 maintains links with each of the satellites 16 in the space segment 54 individually and simultaneously. The hub 12 pre-processes the signals intended for each user on transmission and post-processes the signals supplied to each user on reception to compensate for path differentials. These corrections are separately computed and applied to the signals transmitted to or received from each satellite 16 of the space segment 54.

As discussed above, the design of the satellites can be significantly simplified when using the architecture of the disclosed system 10. This is primarily because there is no need to constrain the satellite coverage area and/or to subdivide the available bandwidth in order to isolate the users served by the various satellites from one another. With respect to the forward link operation, it is sufficient for each satellite 16 to simply rebroadcast a single wide-bandwidth signal received from the hub 12 over a single large coverage area. Because the signal is broadcast over the entire coverage area, the size of the required antenna can be significantly reduced. Furthermore, satellites can be added to the constellation without any change to the satellite antennas. The same attributes also apply to the return link operation. Accordingly, high performance (i.e., throughput) satellites that are relatively simple and small are preferably used with the disclosed system 10.

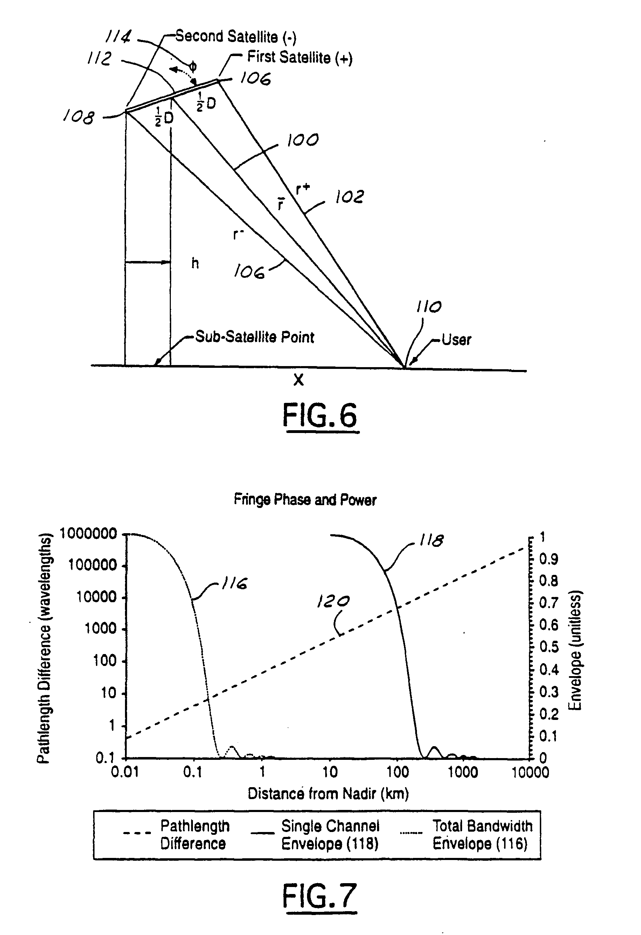

It will be understood that the disclosed system 10, while disclosing a multitude of satellites in the preferred constellation, can also operate when the constellation is reduced to a single pair of satellites 16. This is despite the fact that neither the synthesized antenna nor the beam formed thereby can be easily visualized. When the satellite constellation is reduced in this manner, the antenna pattern normally generated by the constellation is replaced by a fringe pattern characteristic, such as that generated by an interferometer. Two known important spatial dimensions characterize such a fringe pattern. The first of these is the fringe period (i.e., the distance between maxima). Referring to the simplified geometry shown in Figure 6, this period may be determined (to a very good approximation) as follows:

$$\lambda_{\text{IF}} = \frac{\lambda \bar{r}}{D_{\text{base}} \sin \phi_{\text{base}}}$$

where

$\lambda_{\text{IF}}$    is the distance between fringe maxima on the ground plane (m);

$\lambda$    is the RF wavelength of the radiation (m) ;

$\bar{r}$    is the slant range 100, or average of the pathlengths 102, 104 to each of the two elements (i.e., satellites) 106, 108 of the interferometer from the specific point 110 in question on the ground plane (which is to a good approximation given by the pathlength to the midpoint of the interferometer baseline) (km) ;

$D_{\text{base}}$    is the length of the interferometer baseline 112 (i.e., the distance between the two satellites) (km); and

$\phi_{\text{base}}$    is the angle 114 of the interferometer baseline with respect to the normal to the ground plane (rad).

The above described relationship is intended for illustrative purposes only and has been derived based on a highly simplified flat earth model where the observer at point 110 and the two satellites 106, 108 are all in the same plane. If the radiation transmitted (or received) by the satellites 106, 108 were monochromatic (i.e., of vanishingly small bandwidth) then the resulting fringe pattern would appear locally sinusoidal and extend over the entire coverage area. In a monochromatic condition, the separation of the fringes would still vary over the coverage area due to the variation in the slant range 100.

In the more realistic case where the transmitted (or received) radiation is not monochromatic, the amplitude of the fringes varies across the coverage area. In this case, the amplitude of the fringes is maximum where the pathlengths 102, 104 to the two satellites 106, 108 of the interferometer are equal (i.e., the nominal position of the intended user) and falls off as the pathlength difference increases.

The fringe envelope is determined by the autocorrelation function of the transmitted (or received) signal, and can be calculated according to the following equations:

$$\left[h_{\text{RF}} \star h_{\text{RF}}\right]\left(\frac{\Delta r}{c}\right)$$

$$h_{\text{RF}}(t) = \int H_{\text{RF}}(\nu)e^{2\pi i \nu t}\, d\nu$$

where

$t$    represents time (sec);

$\nu$    represents frequency (Hz);

$c$    represents the speed of light (2.99792458 x $10^8$ m/sec) ;

$\Delta r$    is the difference in pathlength from the point in question on the ground plane to the two elements of the interferometer (m);

$h_{\text{RF}}$    is the transmitted (or received) signal waveform (volts); and

$H_{\text{RF}}$    is the spectral density of the transmitted (or received) signal (volt-sec).

Based on a determination of the fringe envelope, the second relevant parameter characterizing the fringe pattern, which is the width of the envelope of the fringe pattern, can be derived. This is derived from the autocorrelation width of the signal, which is in turn given by the reciprocal of the noise equivalent bandwidth as shown below:

$$\Delta x = \frac{c\overline{r}}{2W_N D_{base} \sin \phi_{base}}$$

where

$\Delta x$    is the (half) width of the fringe pattern envelope on the ground plane (m); and

$W_N$    is the noise equivalent bandwidth of the signal (Hz).

These two results may be summarized by the following expression:

$$\frac{\lambda_{IF}}{\lambda} = \frac{\overline{r}}{D_{base} \sin \phi_{base}} = \frac{2\Delta x}{c/W_N}$$

As shown, the denominator of the central expression is the length of the interferometer baseline 112 projected onto the ground plane. Also, the presence of the slant range 100 F, implies a dependence on the position of the user 110.

The impact of the above detailed two fringe pattern parameters is summarized as follows. First, the condition for coherence of the signals received by (transmitted from) the two elements 106, 108 of the interferometer requires the position of the user 110 to be known (and corrected) to within a tolerance which is much less than $\lambda_{IF}$. Conversely, the signals are essentially incoherent for some other user who is displaced from the position of the intended user 110 by a distance of more than $\Delta x$. Signals received from users positioned between these two locations are partially coherent. These concepts for the case of a representative cluster at geosynchronous altitude based on UHF Follow-On are illustrated graphically in Figure 7.

Figure 7 is based on a spherical earth model rather than the simplified planar model which was used to derive the above relations and is a graph plotting fringe phase on the right axis and power envelope on the left axis. For this illustrative example, it is assumed that two satellites 106, 108 are in neighboring orbital slots, separated by 2° longitude. Two cases are shown in the figure which corresponding to available bandwidths of 25 KHz (single channel) as generally represented by reference number 116, and 20 MHz (total bandwidth) as generally represented by reference number 118, respectively. The line 120 represents the pathlength difference in wavelength between the satellites 106, 108, or equivalently the fringe phase.

In accordance with the preferred embodiment, it is desirable that signals received from or by the intended user 110 be coherent across the entire satellite cluster after appropriate correction for pathlength delay. According to the above relationships, a constraint is placed on the precision of the range correction algorithm:

$$\varepsilon_x << \frac{\varepsilon_{tol} \lambda_{min} r_{min}}{\Delta D_{x\,max}}$$

where

$\varepsilon_x$    is the tolerance within which the position of the intended user 110 must be known on the ground plane (m);

$\varepsilon_{tol}$    is the allowed tolerance on fractional phase error for coherence of the signal received by the intended user (cycles);

$\lambda_{min}$    is minimum wavelength over the signal bandwidth (m);

$r_{min}$    is the minimum distance from any satellite of the cluster to any point in the coverage area (km);

and

$\Delta D_{xmax}$ is the size (diameter) of the cluster projected onto the *x*-axis of the ground plane (km).

Similarly, it is desirable that the signals received from or by any non-intended user via any two satellites of the cluster be incoherent with each other. Again applying the above relations, this places a constraint on the minimum acceptable separation between users:

$$\Delta x_{\min} \geq \frac{cr_{\max}}{2W_{N}\delta D_{x\min}}$$

where

$\Delta x_{\min}$ is the minimum distance between any two users on the ground plane (m);
$r_{\max}$ is the maximum distance from any satellite of the cluster to any point in the coverage area (km);
and
$\delta D_{xmin}$ is the minimum distance between any two satellites of the cluster projected onto the *x*-axis of the ground plane (km).

As pointed out above, it is primarily the satisfaction of these two constraints (1) tolerance with which the user position is known and (2) minimum distance between users (in particular, the parameters $\Delta D_{xmax}$ and $\delta D_{xmin}$), which is simplified using a cluster of satellites in slightly perturbed geostationary orbits.

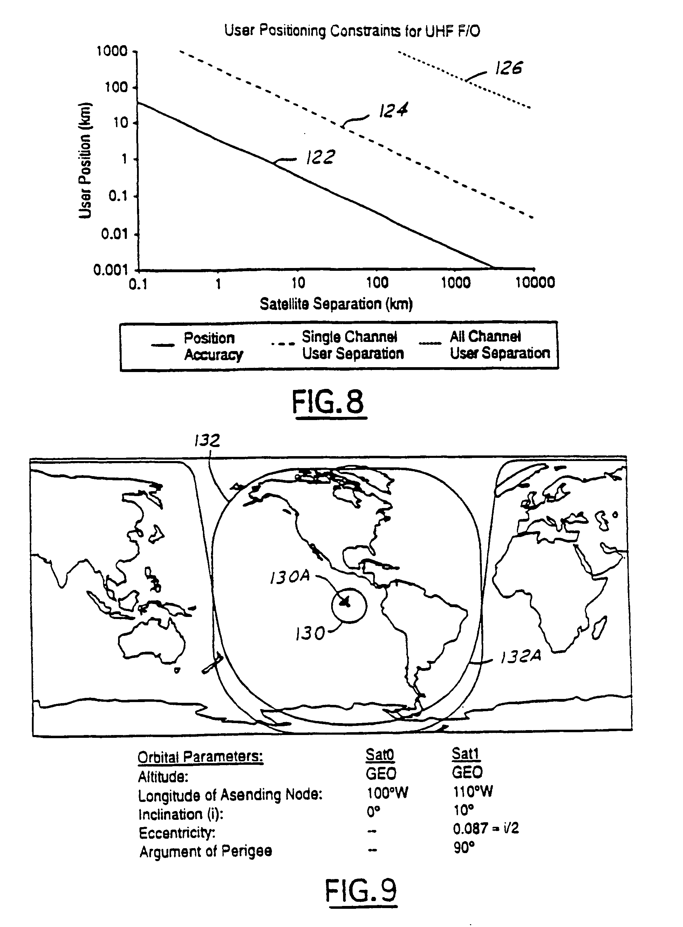

The constraints on user density and location are illustrated graphically in Figure 8 as functions of cluster size and density for the case of a satellite cluster at geosynchronous altitude, namely, UHF Follow-On. Figure 8 illustrates user position accuracy 122, single channel user separation 124, and all channel user separation 126, shown on the y-axis, as functions of the satellite separation, shown in the x-axis. The results shown in Figure 8 are exemplary and correspond generally (the slant range assumptions differ somewhat) to a satellite separation of 2°, or 1472 km. Similar to above, the two conditions are evaluated corresponding to available bandwidth of 25 KHz 124 and 20 MHz 126. The user in this example is assumed to be located on the equator. With respect to the minimum allowed user separation $\Delta x_{\min}$, it has been determined that a system using the total available bandwidth has an advantage of three orders of magnitude as compared with a system having the allocated bandwidth of a single channel. This, however, is compensated for by the fact that there are 1000 channels available in the latter system.

In accordance with the preferred embodiment, the disclosed system 10 utilizes a cluster of satellites 16 in slightly perturbed geostationary orbits. By selecting the orbital characteristics of the various satellites 16 properly, the resulting satellite motion appears (when viewed from the ground) to follow a circular path around the cluster center with a period of one day. The cluster center about which the satellites 16 appear to revolve is the position of a satellite 16 in the corresponding unperturbed geostationary orbit. It is not required, however, that any of the cluster satellites actually occupy this orbit. Furthermore, the apparent satellite motion about the cluster center is at a nearly uniform rate.

In determining the proper orbital characteristics, a preferred coordinate system is first defined in which the z-axis is in the direction of the earth's pole, which is also the orbit normal of a geosynchronous orbit. In this coordinate system, the x-axis is directed outward from the satellite 16 in the zenith direction. The y-axis is positioned so it points towards the east. Furthermore, the coordinate system is centered at the cluster center, which is the position of a satellite 16 in the nominal (unperturbed) geosynchronous orbit. In this coordinate system, the position of the earth is fixed on the negative x-axis. As this example is based on a geosynchronous reference orbit, the earth does not rotate in this frame and the positions of the various users may be regarded as fixed. In addition to the preceding coordinate definition, it is also preferable to define the time origin so that it corresponds to the time when a satellite in the perturbed orbit is at perigee.

Once the coordinate system has been defined, the effect of perturbing only the eccentricity of the orbit on the radial (x) component of the motion is first considered. The motion of the satellite in the coordinate system defined above is confined to the xy (equatorial) plane, since the inclination of the orbit is still identically zero. According to Kepler's First Law, the orbital motion (in an inertial coordinate system) is an ellipse with the earth at one focus. The radial component of the motion in the above-defined system of coordinates is then determined as follows:

$$x = \frac{a_{GEO}\left(1 - \varepsilon^2\right)}{1 + \varepsilon \cos\theta} - a_{GEO} \cong -a_{GEO}\varepsilon\cos\theta \cong -a_{GEO}\varepsilon\cos\left(2\pi\frac{t}{T_{GEO}}\right)$$

where

$x$      represents the displacement of the perturbed satellite from the cluster center in the radial direction (km);

$\alpha_{GEO}$      is the radius of the reference geosynchronous orbit (km);

$\varepsilon$      is the eccentricity of the perturbed geosynchronous orbit (m);

$t$      represents the time relative to the time of perigee for a satellite in the perturbed orbit (km);
and

$T_{GEO}$      represents the period (one sidereal day) of the reference geosynchronous orbit (sec).

The approximations are valid to first order in the perturbed eccentricity. Furthermore, a zeroth order relation between the azimuthal position of the satellite in its orbit and time is adequate in the final expression due to the presence of the eccentricity.

Next, the effect of perturbing only the eccentricity of the orbit on the y (azimuthal) component of the motion is considered. The azimuthal component of the motion may be deduced from an application of Kepler's Second Law, which states that the position vector of the satellite (relative to the center of the earth) sweeps out equal areas in equal times. This is essentially a statement of the conservation of angular momentum.

$$2\pi\frac{t}{T_{GEO}}a_{GEO} = \int_0^\theta r^2\left(\theta'\right)\ d\theta' = \int_0^\theta\left[\frac{a_{GEO}\left(1 - \varepsilon^2\right)}{1 + \varepsilon\cos\theta'}\right]^2 d\theta' \qquad (1)$$

$$\cong a_{GEO}\int_0^\theta\left(1 - 2\varepsilon\cos\theta'\right)\ d\theta' = a_{GEO}\left(\theta - 2\varepsilon\sin\theta\right)$$

$$y \cong a_{GEO}\left(\theta - 2\pi\frac{t}{T_{GEO}}\right) = 2a_{GEO}\varepsilon\sin\theta \cong 2a_{GEO}\varepsilon\sin\left(2\pi\frac{t}{T_{GEO}}\right) \qquad (2)$$

where

$y$      represents the displacement of the perturbed satellite from the cluster center in the east direction (km);
and
$r$      represents the radial distance of the satellite in the perturbed orbit from the center of the earth (km).

The first equation (1) above is simply a statement of Kepler's Second Law for both the reference circular orbit (on the left) and the perturbed orbit. The second equation (2) expresses the result in the coordinate system being used here.

The effect of perturbing the inclination of the orbit on the z (north) component of the motion is now considered. It can be seen from the equation below that perturbing the inclination will not (to first order) affect the preceding results, since the perturbation is normal to the equatorial plane. The magnitude of the displacement from the equatorial plane will be proportional to the distance of the satellite from the line of nodes where the perturbed orbit plane intersects the equatorial plane. The displacement can therefore be expressed as follows:

$$z = r(\theta)\sin(\theta - \theta_0)\sin i \cong a_{\text{GEO}} \sin i \sin(\theta - \theta_0) \cong a_{\text{GEO}} \sin i \sin\left(2\pi \frac{t - t_0}{T_{\text{GEO}}}\right)$$

where

$z$    represents the displacement of the perturbed satellite from the cluster center in the north direction (km);

$\theta_0$    represents the azimuthal position of the satellite as it crosses the equatorial plane (line of nodes) in the ascending direction (sec); and

$t_0$    represents the time at which the satellite crosses the equatorial plane (line of nodes) in the ascending direction (sec).

Once again, it has been noted that the perturbed inclination is already small, so that zero[th] order approximations for the radial position of the satellite and the relation between azimuth and time are adequate.

If it is assumed that the motion described by the above equations is confined to a plane, then the normal to that plane can be derived from the cross-product of the position vector at any two times. Taking one of these times to correspond to the time at which the satellite crosses the equatorial plane, the following equation is derived:

$$z = r(\theta)\sin(\theta - \theta_0)\sin i \cong a_{\text{GEO}} \sin i \sin(\theta - \theta_0) \cong a_{\text{GEO}} \sin i \sin\left(2\pi \frac{t - t_0}{T_{\text{GEO}}}\right)$$

$$\mathbf{p}(\theta_0) \times \mathbf{p}(\theta) \cong (a_{\text{GEO}}\varepsilon)^2 \begin{pmatrix} -\cos\theta_0 \\ 2\sin\theta_0 \\ 0 \end{pmatrix} \times \begin{pmatrix} -\cos\theta \\ 2\sin\theta \\ \dfrac{\sin i}{\varepsilon}\sin(\theta - \theta_0) \end{pmatrix}$$

$$= a_{\text{GEO}}^2 \varepsilon \sin i \sin(\theta - \theta_0) \begin{pmatrix} 2\sin\theta_0 \\ \cos\theta_0 \\ -2\left(\dfrac{\varepsilon}{\sin i}\right) \end{pmatrix}$$

where

$\mathbf{p}$    denotes the position vector of the satellite in the coordinate system under consideration (m).

The derived motion is planar, since the dependence on time is confined to the magnitude of the cross-product, and not its direction. Furthermore, the motion may be recognized to trace out an ellipse with its geometrical center at the cluster center. This is seen from the above equations as the x and y components of the motion define an elliptical cylinder and also noting that the intersection of this cylinder with an arbitrary plane (e.g., the plane normal to the user line of sight) must be an ellipse.

The above expressions are derived based on an observer located at the sub-satellite point corresponding to the cluster center. As discussed above, the perturbations applied to the reference geostationary orbit are assumed small. From these relations, it can be seen that the conditions for circular apparent motion of the perturbed satellite relative to the cluster center as seen by an observer at the nadir are determined as follows:

$$\sin i = 2\varepsilon$$

$$t_0 = \pm \tfrac{1}{4} T_{\text{GEO}}$$

In this case, the x component of the motion is not seen, and the apparent orbital motion is the projection onto the yz plane. An application of the above results is illustrated in Figure 9, which shows the ground traces of two satellites in perturbed geosynchronous orbits, such as discussed above, and their respective coverage areas. As shown, the first satellite (Sat O) is in an unperturbed geosynchronous orbit and has a ground trace stationary at the point 130A. The second satellite (Sat 1) is also in a perturbed geosynchronous orbit and has a ground trace represented by line 130, which appears as a circle. The coverage area served by the first satellite is the interior of the curve 132, and is stationary in time. The coverage area served by the second satellite at a particular instant in time is shown as the region above the curve 132A.

The apparent motions of the various satellites in the cluster can be arranged to appear circular as perceived from any point on the surface of the earth, as described above, by appropriate choice of the perturbed orbital eccentricity and inclination. However, this condition occurs only for a single position of the observer. Other observers not located at this position will perceive the orbited motion to be somewhat elliptical. In accordance with the objects of the present invention, this is acceptable, as long as the displacement of the observer from the optimum location is not too great. For the case of geosynchronous satellites, large displacements of the observer can be allowed without seriously degrading the apparent circular character of the motion. This is because the angular size of the earth as seen from geosynchronous altitude is only about 17.4°.

Based on the above, and in accordance with a preferred embodiment, a relationship exists between the perturbed inclination and the eccentricity such that the perturbed satellite appears to a particular observer to move at constant speed along a circular path. The motion is centered at the position of a (hypothetical) satellite in the unperturbed reference orbit (i.e., the cluster center). This means that the geometry of the cluster can be arranged through suitable choices of the phases and radii of the motions of the various satellites to appear as a slowly rotating, rigid lattice. The apparent inter-satellite separations in this lattice are all relatively constant.

The disclosed system 10 preferably has this configuration, since it constrains the rate of variation of the various pathlength corrections that must be computed and applied in the processing by the ground hub 12. It also allows the system to be configured to ensure that certain pathological cases (such as when the projected baseline between two satellites in the cluster vanishes) do not occur.

In accordance with the operation of the disclosed satellite communication system 10 the satellite constellation is viewed as a sparse radiating (or receiving) array. The more elements (satellites) 16 in the constellation, the better performance the communications system will achieve. Because the system capacity scales with the number of satellites, the addition of more satellites will satisfy additional demand. The capacity of the system is limited primarily by total satellite RF power, which is proportional to the number of satellites in the constellation. This view applies especially well to geosynchronous applications, such as that currently disclosed. In the ideal case where all the (apparent) inter-satellite distances are fixed, the constellation may be viewed as a rigid lattice or aperture which rotates once per day. In the more general case, the apparent inter-satellite distances will vary slightly over the daily period of the motion. This can be visualized in terms of periodic distortions of the rotating aperture.

Perturbed orbits are particularly useful with respect to larger satellite clusters. This can be understood by comparing the above derived constraints on the precision with which the user location is known ($\varepsilon_x$), and the user separation or density ($\Delta x_{min}$). The desire to maximize the former, while simultaneously minimizing the latter allows the cluster size to be minimized ($\Delta D_{xmax}$), while also maximizing the minimum projected distance between satellites in the cluster ($\delta D_{xmin}$). For clusters containing a very large number of satellites, this is preferably achieved by a circular cluster within which the satellites 16 are uniformly distributed. This follows from the observation that the circle is the geometric figure that inscribes the largest area (i.e., number of satellites) within the smallest dimension. A consequence of this is the fact that the number of satellites 16 that can occupy a given range of longitudes while maintaining a given minimum distance between satellites 16 can be increased as the square of the longitude range.

When there are only two satellites in the cluster, it is preferable to keep the satellites in circular orbits, and simply separate them in longitude. In this case, it has been determined that there is no advantage which can be gained by forming a two-dimensional structure, since the two satellites can never define any more than a single line. Furthermore, there is a potential disadvantage in having a rotating baseline in this case. This is due to the increased complexity required in tracking the satellites, and the rotation of the fringe pattern that results from a rotating baseline. Neither of these conditions would apply when the two satellites are in circular orbits.

In accordance with the preferred system, the architecture allows the system to remain operable with no reconfiguration even after the loss of one or more satellites. However, some reconfiguration of the cluster geometry may be required after satellite loss in order to achieve optimum performance from the diminished cluster. The main consequence resulting from the loss of a satellite is a proportionate decrease in system capacity. Consequently, the disclosed system provides graceful degradation characteristics, providing very high reliability and availability, as discussed above. This will result in little or no impact on the user terminals or other satellites in the space segments. Additionally, the hub processing capability can be built up of highly modular components allowing for easy expansion in a modular fashion.

As discussed above, an important aspect of the system 10 is that the complexity of the system is preferably concentrated in the ground hubs 12. In particular, the hubs 12 locate and track the potential users, insert appropriate time delays into the signals for each combination of user and satellite, and perform the major functions of beam-forming, synchronization and filtering. It should be understood that each satellite functions as a simple single channel transponder or "bent pipe" and can be of a very simple design. The complexity of processing performed in the hub scales roughly as the product of the number of users and the number of satellites. Since the capacity is proportional to the number of satellites, it follows that hub complexity scales roughly as the square of the number of satellites. The complex processing requirements are concentrated in the ground hubs 12 and not the satellites or mobile user terminals.

Studies have been performed to examine the growth in capacity (i.e., the Shannon-Hartley capacity) of a system employing the disclosed architecture as satellites are added to the space segment. The main conclusion of these studies is that the capacity of a Multiple Satellite Communication System continues to grow as more satellites are added. This growth in capacity is in contrast to what would be achieved by a comparable FDMA system, whose total system capacity remains roughly constant as more satellites are added. Ultimately, the number of users in the disclosed system is limited by the minimum user separation constraint $\Delta x_{min}$, and also by regulatory constraints on the maximum permissible power flux density.

One embodiment of the present invention is to apply it to the UHF Follow-On constellation. The basic UHF constellation contains eight geostationary satellites organized into four satellite pairs. Any one of these satellite pairs could be configured as a simple two-element system in accordance with the present invention. The UHF subsystem of UHF Follow-On appears to be the best candidate for an application of the disclosed architecture, since this subsystem performs the least processing of the signal and, therefore, most closely satisfies the requirement for bent-pipe operation. This subsystem operates in a 20 MHz frequency band, which is divided into 25 kHz channels. The uplink for the UHF subsystem at 305 MHz is used as a point of reference in the above examples; no computations are done for the downlink at 253.5 MHz. These parameters are applied to the representative cases illustrated in Figures 7 and 8 above.

It should be understood while the preferred system 10 uses multiple satellites, a variety of other transponder platforms or individual transponder nodes may be utilized. For example, any high altitude platform may be used or a regional or national tower system may also be used. It is even possible to utilize a mixture of transponder types.

**Claims**

1. A method for transmitting a communications signal (20) to one of a plurality of mobile user terminals (18) via at least two satellites in geosynchronous orbits, comprising the steps of:

   processing a received signal (42) at a ground hub (12); predicting any time delays among multiple paths between the ground hub and and the one mobile user terminal;
   radiating the processed signal (24) through the multiple paths to the at least two satellites (16; 106, 108), the geosynchronous orbits of which are perturbed in inclination and in eccentricity relative to the same geosynchronous reference orbit in such a way that the periods of the geosynchronous orbits of said at least two satellites (16; 106, 108) remain constant ; and
   re-radiating said signal (24, 20) from said at least two satellites (16, 106, 108) to the one mobile user terminal (18).

2. The method of claim 1, further comprising:

   determining a relationship between said inclination and said eccentricity of said satellites (16; 106, 108) such that they appear to move at a constant speed along circular paths (130) whose centers are located at the position of a hypothetical reference satellite in an unperturbed geosynchronous orbit.

3. The method of claim 2, further comprising:

   maintaining the geometry of a cluster of at least two satellites (16; 106, 108) such that the distances between any two of said satellites (16; 106, 108) is relatively constant.

4. The method of claim 3, further comprising:

   adding additional satellites to said at least two satellites (16; 106, 108) to augment the satellite constellation.

**5.** A mobile wireless communication system, comprising:

a ground hub
a satellite constellation (14) consisting of a plurality of satellites (16; 106, 108);
each of said plurality of satellites (16; 106, 108) being capable of relaying signals (20, 24, 40, 42) between the ground hub (12) and a plurality of user terminals (18) in either direction;
the ground hub adapted to predict any time delays among multiple paths between the ground hub and one of the uses terminals
each of the satellites (16; 106, 108) being in a perturbed geosynchronous orbit, wherein each of said plurality of satellites (16; 106, 108) has its inclination and eccentricity perturbed relative to a common geosynchronous reference orbit;
whereby as said satellite constellation (14) appears to rotate, as perceived from a point on the surface of the earth, the apparent inter-satellite spatial relationships are maintained.

**6.** The system of claim 5, wherein the orbit of each of said plurality of satellites (16; 106, 108) is perturbed such that it appears to move at a constant speed along a circular path (130) as viewed by a single user.

**7.** The system of claim 6, wherein the conditions for circular apparent motion of the perturbed satellite (106, 108) relative to said satellite constellation center is approximated by the following:

$$\sin i = 2\mathcal{E}$$

$$t_0 = \pm\frac{1}{4}T_{GEO}$$

**Patentansprüche**

**1.** Verfahren zum Übertragen eines Kommunikationssignals (20) zu einem einer Vielzahl von mobilen Benutzerterminals (18) über wenigstens zwei Satelliten, die sich in geosynchronen Orbits befinden, mit den Schritten:

Verarbeiten eines empfangenen Signals (42) an einem am Boden angeordneten Netzknoten (12);
Vorhersagen jeglicher Zeitverzögerungen zwischen multiplen Pfaden zwischen dem bodengestützten Netzknoten und dem einen mobilen Benutzerterminal;
Abstrahlen des verarbeiteten Signals (24) zu den wenigstens zwei Satelliten (16; 106, 108) durch die multiplen Pfade hindurch, wobei die geosynchronen Orbits der Satelliten hinsichtlich Inklination und Exzentrizität relativ zu demselben geosynchronen Referenzorbit abweichen, derart, dass die Perioden der geosynchronen Orbits der wenigstens zwei Satelliten (16; 106, 108) konstant bleiben, und
Wiederabstrahlen des Signals (24, 20) von den wenigstens zwei Satelliten (16; 106, 108) zu dem einen mobilen Benutzerterminal (18).

**2.** Verfahren nach Anspruch 1, mit dem weiteren Schritt:

Bestimmen einer Beziehung zwischen der Inklination und der Exzentrizität der Satelliten (16; 106, 108), derart, dass es so aussieht, als bewegen sie sich mit einer konstanten Geschwindigkeit entlang zirkularer Pfade (130), deren Mitten in der Position eines hypothetischen Referenzsatelliten in einem nicht abweichenden geosynchronen Orbit angeordnet sind.

**3.** Verfahren nach Anspruch 2, mit dem weiteren Schritt:

Aufrechterhalten der Geometrie eines Clusters von wenigstens zwei Satelliten (16; 106, 108), derart, dass die Distanzen zwischen jeglichen zwei der Satelliten (16; 106, 108) relativ gesehen konstant sind.

**4.** Verfahren nach Anspruch 3, mit dem weiteren Schritt:

Hinzufügen von zusätzlichen Satelliten zu den wenigstens zwei Satelliten (16; 106, 108), um die Satellitenkonstellation zu erweitern.

**5.** Mobiles drahtloses Kommunikationssystem, mit:

einem bodengestützten Netzknoten,
einer Satellitenkonstellation (14), die eine Vielzahl von Satelliten (16; 106, 108) aufweist;
wobei jeder der Vielzahl von Satelliten (16; 106, 108) dazu in der Lage ist, Signale (20, 24, 40, 42) zwischen dem bodengestützten Netzknoten (12) und einer Vielzahl von Benutzerterminals (18) in beiden Richtungen weiterzugeben;
wobei der bodengestützte Netzknoten dazu ausgelegt ist, jegliche Zeitverzögerungen zwischen multiplen Pfaden zwischen dem bodengestützten Netzknoten und einem der Benutzerterminals vorherzusagen;
wobei jeder der Satelliten (16; 106, 108) sich in einem abweichenden geosynchronen Orbit befindet, wobei die Inklination und die Exzentrizität von jedem der Vielzahl von Satelliten (16; 106, 108) relativ zu einem gemeinsamen geosynchronen Referenzorbit abweichen;
wobei dann, wenn die Satellitenkonstellation (14) sich zu drehen scheint, und zwar wahrgenommen von einem Punkt von der Oberfläche der Erde aus, die anscheinende räumliche Beziehung zwischen den Satelliten aufrechterhalten wird.

**6.** System nach Anspruch 5, wobei der Orbit von jedem der Vielzahl von Satelliten (16; 106, 108) derart abweicht, so dass er, wenn von einem einzelnen Benutzer betrachtet, als sich mit einer konstanten Geschwindigkeit entlang eines kreisförmigen Pfades (130) bewegend erscheint.

**7.** System nach Anspruch 6, wobei die Bedingungen für eine kreisförmige anscheinende Bewegung des abweichenden Satelliten (106, 108) relativ zu der Mitte der Satellitenkonstellation sich durch folgende Beziehungen annähern lassen:

$$\sin i = 2\varepsilon$$

$$t_0 = \pm \frac{1}{4} T_{GEO}$$

## Revendications

**1.** Procédé de transmission d'un signal de communication (20) à l'un d'une pluralité de terminaux utilisateurs mobiles (18) par l'intermédiaire d'au moins deux satellites sur des orbites géosynchrones, comprenant les étapes consistant à :

traiter un signal reçu (42) au niveau d'un concentrateur terrestre (12) ;
prédire d'éventuels temps de retard entre les multiples trajets séparant le concentrateur terrestre dudit terminal utilisateur mobile ;
émettre les signaux traités (24) par l'intermédiaire des multiples trajets vers les au moins deux satellites (16 ; 106, 108) dont les orbites géosynchrones sont perturbées en inclinaison et en excentricité par rapport à la même orbite géosynchrone de référence de telle manière que les périodes des orbites géosynchrones desdits au moins deux satellites (16 ; 106, 108) restent constantes ; et
réémettre ledit signal (24, 20) à partir desdits au moins deux satellites (16, 106, 108) vers ledit terminal utilisateur mobile (18).

**2.** Procédé selon la revendication 1, consistant en outre à :

déterminer une relation entre ladite inclinaison et ladite excentricité desdits satellites (16 ; 106, 108) de manière à ce qu'ils semblent se déplacer à vitesse constante le long de trajectoires circulaires (130) dont les centres sont situés à la position d'un satellite de référence hypothétique sur une orbite géosynchrone non perturbée.

**3.** Procédé selon la revendication 2, consistant en outre à :

    maintenir la géométrie d'une grappe d'au moins deux satellites (16 ; 106, 108) de manière à ce que les distances entre deux quelconques desdits satellites (16 ; 106, 108) soient relativement constantes.

**4.** Procédé selon la revendication 3, consistant en outre à :

    ajouter des satellites supplémentaires auxdits au moins deux satellites (16 ; 106, 108) pour augmenter la constellation de satellites.

**5.** Système de communication sans fil mobile, comprenant :

    un concentrateur terrestre ;
    une constellation de satellites (14) constituée d'une pluralité de satellites (16 ; 106, 108) ;
    chacun de ladite pluralité de satellites (16 ; 106, 108) étant capable de relayer des signaux (20, 24, 40, 42) entre le concentrateur terrestre (12) et une pluralité de terminaux utilisateurs (18) dans un sens ou dans l'autre ;
    le concentrateur terrestre étant apte à prédire d'éventuels temps de retard parmi les multiples trajets séparant le concentrateur terrestre de l'un des terminaux utilisateurs ;
    chacun des satellites (16 ; 106, 108) étant sur une orbite géosynchrone perturbée, dans lequel chacun de ladite pluralité de satellites (16 ; 106, 108) a son inclinaison et son excentricité perturbées par rapport à une orbite géosynchrone de référence commune ;
    de sorte que, lorsque ladite constellation de satellites (14) semble tourner, telle qu'elle est perçue depuis un point situé à la surface de la terre, les relations spatiales inter-satellites apparentes soient conservées.

**6.** Système selon la revendication 5, dans lequel l'orbite de chacun de ladite pluralité de satellites (16 ; 106, 108) est perturbée de telle manière qu'elle semble se déplacer à vitesse constante le long d'une trajectoire circulaire (130) telle qu'elle est vue par un utilisateur unique.

**7.** Système selon la revendication 6, dans lequel les conditions d'un mouvement apparent circulaire du satellite perturbé (106, 108) par rapport audit centre de la constellation de satellites sont déterminées approximativement comme suit :

$$\sin i = 2\varepsilon$$

$$t_0 = \pm \frac{1}{4} T_{GEO}$$

FIG.1

FIG.2

FIG.3

FIG.4

## FIG.5

**FIG.6**

Fringe Phase and Power

| _ _ _ Pathlength<br>Difference | ___ Single Channel<br>Envelope (118) | ........ Total Bandwidth<br>Envelope (116) |

**FIG.7**

## User Positioning Constraints for UHF F/O

FIG.8

| Orbital Parameters: | Sat0 | Sat1 |
|---|---|---|
| Altitude: | GEO | GEO |
| Longitude of Asending Node: | 100°W | 110°W |
| Inclination (i): | 0° | 10° |
| Eccentricity: | -- | 0.087 = i/2 |
| Argument of Perigee | -- | 90° |

FIG.9

**EP 1 208 660 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5839059 A
- US 5839053 A
- US 5233626 A
- EP 0837568 A2
- US 209062 A